(19) Europäisches Patentamt
European Patent Office
Office européen des brevets

(11) Publication number: 0 096 365
A1

(12) EUROPEAN PATENT APPLICATION

(21) Application number: 83105456.4

(22) Date of filing: 01.06.83

(51) Int. Cl.³: C 08 F 214/06
C 08 F 2/18, C 08 F 4/38

(30) Priority: 07.06.82 US 386146

(43) Date of publication of application: 21.12.83 Bulletin 83/51

(84) Designated Contracting States: DE FR GB

(71) Applicant: AIR PRODUCTS AND CHEMICALS, INC.
P.O. Box 538
Allentown, Pennsylvania 18105(US)

(72) Inventor: Mango, Phillip Anthony
151 Capricorn drive Apartment 5
South Somerville, NJ 08876(US)

(74) Representative: Kador . Klunker . Schmitt-Nilson . Hirsch
Corneliusstrasse 15
D-8000 München 5(DE)

# (54) Shortened reaction cycle times in vinyl chloride-propylene copolymerization.

(57) The reaction cycle time for the suspension copolymerization of vinyl chloride and propylene is shortened by conducting the polymerization reaction in the presence of a dual initiator system comprising a t-butyl peroxyneoalkanoate and alpha-cumyl peroxyneodecanoate. The vinyl chloride-propylene copolymer resin has improved thermal stability.

EP 0 096 365 A1

Croydon Printing Company Ltd.

0096365

# SHORTENED REACTION CYCLE TIMES IN VINYL CHLORIDE-PROPYLENE COPOLYMERIZATION

## TECHNICAL FIELD

The present invention relates to the suspension copolymerization of vinyl chloride and an alkene, particularly propylene.

## BACKGROUND OF THE INVENTION

Vinyl chloride-propylene copolymers have significant rheological advantages over other polymers in certain applications such as phonograph records and battery casings. The primary disadvantage is the very long reaction cycle times required to produce the copolymers.

The problem of long reaction cycle times is common to vinyl chloride polymerizations; however, it is very pronounced in vinyl chloride-propylene copolymerizations because the propylene reacts more slowly with the vinyl chloride monomer than vinyl chloride reacts with itself. Therefore, the presence of propylene in a vinyl chloride polymerization system causes the reaction to slow down. In effect, propylene acts as a retarder.

A further problem exists in that an increased concentration of initiator used to speed up the reaction will deleteriously affect the resin thermal stability.

Therefore, an initiator system which will reduce the reaction cycle times to compare favorably with the reaction cycle time for vinyl chloride homopolymer as well as increase the resin thermal stability is highly desirable.

The ultimate goal for an initiator is to generate a uniform heat release due to the polymerization reaction which is exactly equal to the available cooling capacity of the industrial polymerization reactor. If cooling capacity were unlimited, any initiator would give almost instantaneous polymerization. Since cooling capacity is finite and constant for a given reactor, it is of tremendous commercial value to be able to provide a constant polymerization rate.

Either a slow or a fast initiator has severe drawbacks. A slow initiator alone will start out very slowly and take a much longer time to reach a given conversion for a fixed maximum heat release. While a slow initiator is usually uniform in decomposition rate, it leaves most of the initiator unused.

A fast initiator will start out fast and then very slowly reach a given conversion. In other words, a fast initiator, while leaving little initiator unused, has very little reaction initiating effect over the last part of the reaction cycle.

If the concentration of either the fast or slow initiator is high enough, the conversion for a given time can be significantly reduced. However, this can only be achieved by overrunning the maximum heat release for the mixed system. In a production reactor, this means non-isothermal operation resulting in poor product quality or runaway reactions with potential explosion of the reactor.

One suggested prior art solution was to increase the amount of free-radical catalyst employed in the reaction mixture periodically during the reaction.

Although this method did shorten the reaction cycle time to a more acceptable number, other drawbacks arose making this method less than satisfactory. Besides the added cost of the final polymer from use of substantially greater amounts of catalyst making it economically unattractive, it was further discovered that the prepared resins lacked required thermal stability properties. This was evidenced by their tendency to darken and discolor when exposed to elevated temperatures.

An example involves the incremental use of a single initiator, t-butyl peroxyneodecanoate, in very large quantities. The increase in the retardation effect of propylene as the reaction progresses is overcome by introduction of the initiator at several times during the reaction. The reaction cycle time is reduced somewhat although not to that equivalent to vinyl chloride homopolymerization. The disadvantage is the decrease in thermal stability of the resin product caused by the quantities of initiator remaining unreacted at the end of the reaction. In addition, such unreacted initiator can cause significant fouling problems in the monomer recovery system.

In order to overcome these problems in the vinyl chloride homopolymerization art, it has been proposed to combine a catalyst having high catalytic activity and a short half-life with a catalyst having low catalytic activity and a long half-life. Finding such a combination of initiators for use in the copolymerization of vinyl chloride and propylene is especially difficult because the increasing relative amount of propylene slows down a reaction as the reaction progresses. Since decomposition rate of the initiator is a function of the monomer mix, there is no way to predict or extrapolate from vinyl chloride homopolymerization behavior those initiator systems which will produce good results in vinyl chloride-propylene copolymerizations.

Representative of the art teaching dual initiator systems are the following patents:

U.S. 3,373,150 discloses a dual initiator system comprising a dialkyl peroxydicarbonate and a diacyl peroxide for use in the homogenized dispersion polymerization of vinyl chloride.

U.S. 3,420,807 discloses the combination of t-butyl peroxypivalate and diacyl peroxides in the suspension polymerization of vinyl chloride.

U.S. 3,687,867 discloses vinyl chloride polymerization using a dual initiator system comprising a t-alkyl perester of t-hydroperoxide and either a nitrile-containing azo compound or an aliphatic diacyl peroxide.

U.S. 3,781,255 discloses a process for polymerizing vinyl chloride in the presence of a mixture of acetyl cyclohexyl sulfonyl peroxide and t-butyl peroxypivalate. The use of such dual initiator system is said to afford a constant polymerization speed in large scale production.

U.S. 4,107,419 discloses a co-initiator composition for vinyl chloride and vinyl chloride-vinyl acetate polymerizations containing an alpha-halo diacyl peroxide and a co-peroxide selected from t-alkyl peresters of t-hydroperoxides, peroxydicarbonates, acyl peroxycarbonic esters, and aliphatic diacyl peroxides. The polymer product is said to have improved heat stability as well as a finer particle size distribution. The co-initiators are also said to demonstrate improved efficiencies and polymer yield.

U.S. 4,125,695 discloses a process for the free radical polymerization of the vinyl monomers wherein the temperature of the polymerization is progressivly increased by at least 30°C during the period of polymerization within a temperature range of from 50 to 160°C and wherein the final temperature is at least 110°C. The polymerization reaction includes an initiator sensitive to produce free radicals near or at the low

temperature end of the range and an initiator sensitive to produce free radicals near or at the high temperature end of the range.

In addition, U.S. Patents 3,468,858; 3,468,859; 3,624,123; 3,762,847; 3,838,138; and 4,063,013 disclose the use of t-neoalkanoate peresters of t-hydroperoxides in the suspension polymerization of vinyl chloride.

## SUMMARY OF THE INVENTION

The invention provides a method for shortening the reaction cycle time in the suspension copolymerization of vinyl chloride and propylene. A dual free radical initiator system comprising a t-butyl peroxyneoalkanoate and alpha-cumyl peroxyneodecanoate is used to produce vinyl chloride-propylene copolymer containing 1 to 10 wt. % propylene.

In addition to decreasing the reaction cycle time the use of the dual initiator system affords the following advantages:

A smaller amount of free radical initiator is necessary for a given yield of copolymer. The invention uses only that amount of slow initiator needed to maintain the reaction at the very end of the cycle. Therefore less initiator is needed than in a single initiator system supporting the entire reaction.

Since less free radical initiator is added to the polymerization reaction, less undecomposed initiator remains at the completion of the reaction cycle decreasing fouling of the recovery system.

The vinyl chloride-propylene copolymer beads produced using the dual initiator system demonstrate improved thermal stability.

## DETAILED DESCRIPTION OF THE INVENTION

The invention uses a single initial addition of a dual initiator system comprising two free radical

initiators having different rates of decomposition to adapt to a changing monomer mix over the period of the reaction cycle.

The invention is directed to an improved vinyl chloride-propylene copolymerization process using a dual free radical initiator system comprising a t-butyl peroxyneoalkanoate and alpha-cumyl peroxyneodecanoate. This particular catalyst system provides the advantage of shorter reactor cycle times while correspondingly improving the thermal stability of the resin.

The vinyl chloride-propylene copolymers produced by the present invention contain about 90 to 99 wt.% vinyl chloride and generally from 1 to 10 wt.%, more preferably 2 to 8 wt.%, propylene. The suspension copolymerization temperatures are generally about 35 to 80°C with the procedures being those familiar to a worker skilled in the art such as disclosed in U.S. Patents 3,468,858 and 3,838,138 which are incorporated by reference.

The two catalysts in the reaction mixture decompose to provide the free radicals necessary to bring about the polymerization. These initiators are derived from "neo" acids which denote a series of compounds having their alpha carbon atoms fully substituted with alkyl groups.

The particular t-butyl peroxyneoalkanoates employed in the process of this invention may be represented by the formula:

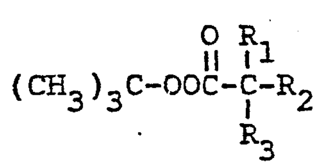

wherein $R_1$, $R_2$ and $R_3$ are $C_1$-$C_{10}$ alkyl radicals, preferably having a summation of from 3 to 8 carbon atoms. Alkyl donates any branched or straight chain radicals

such as methyl, ethyl, propyl, isopropyl, butyl, sec-butyl, t-butyl, pentyl, sec-pentyl, hexyl, decyl and the like. When $R_1$, $R_2$ and $R_3$ have a summation of 3 carbon atoms, i.e. all methyl groups, the initiator is t-butyl peroxypivalate. When the summation of the 3 alkyl radicals equals 8 carbon atoms, the formula represents a t-butyl peroxyneodecanoate.

The above catalysts are known compounds and are documented, for example in U.S. Patent 3,624,123. Typically, their preparation entails converting a neoalkanoic acid to its acid halide and esterifying with tertiary butyl hydroperoxide. The catalysts are also available commercially under such trademarks as ESPEROX and LUPERSOL. Frequently, the commercially available catalysts will be employed as mixtures of isomers.

One example of mixtures of isomers of a t-butyl perneoalkanoate will have the following structural formulas:

(I) 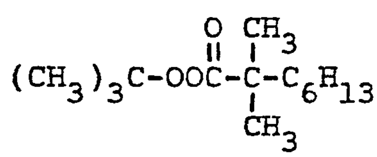

(II) 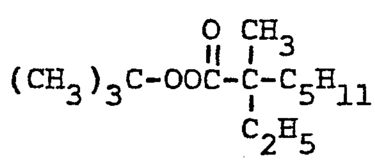

(III) 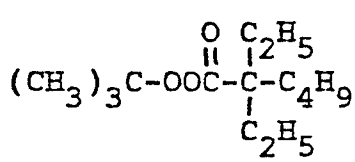

Accordingly, t-butyl perneodecanoate may have, for example, a minor amount of isomer (III), amounting to only about 2 wt.% and a major amount of about 98 wt.% of isomers (I) and (II) of which isomer (I) will be

present at about 33% and isomer (II) at about 67%. Other representative catalysts are shown in Table 1 below.

TABLE 1

| $R_1$ | $R_2$ | $R_3$ |
|---|---|---|
| t-$C_4H_9$ | $CH_3$ | n-$C_3H_7$ |
| $C_6H_{13}$ | $CH_3$ | $CH_3$ |
| $CH_3$ | i-$C_3H_7$ | $C_4H_9$ |
| $C_3H_7$ | $CH_3$ | t-$C_4H_9$ |
| $C_3H_7$ | sec-$C_4H_9$ | $CH_3$ |
| $C_2H_5$ | $C_2H_5$ | $C_4H_9$ |
| $CH_3$ | $C_6H_{13}$ | $CH_3$ |
| $C_5H_{11}$ | $CH_3$ | $C_2H_5$ |
| $CH_3$ | $C_2H_5$ | $C_5H_{11}$ |
| $C_2H_5$ | $C_2H_5$ | $CH_3$ |
| $CH_3$ | $CH_3$ | $C_2H_5$ |
| $C_2H_5$ | $C_2H_5$ | $C_2H_5$ |
| $CH_3$ | $C_2H_5$ | $C_8H_{17}$ |
| $CH_3$ | $CH_3$ | $C_9H_{19}$ |

The t-butyl peroxyneoalkanoate catalysts used in polymerizing vinyl chloride and propylene according to the process of the invention generally have a 10 hour half-life temperature of about 35 to 65°C, and more particularly about 48° to 52°C.

Contemplated as the functional, or operative, equivalent to a t-butyl peroxyalkanoate in the dual initiator system are peresters of neoalkanoic acids derived from t-hydroperoxides of the formula

$$R_5-\overset{R_4}{\underset{R_6}{C}}-OOH$$

wherein $R_4$ and $R_5$ are $C_1$-$C_4$ alkyl radicals and $R_6$ is a straight- or branched-chain $C_1$-$C_{18}$ alkyl radical.

The alpha-cumyl peroxyneodecanoate which is used as the other component of the dual free radical initiator system in the process of the invention has a 10 hour half-life temperature of about 38°C. The catalyst is commercially available under the trademark Lupersol 188 from Lucidol Division of Pennwalt Corp.

The method for making the thermally stable vinyl chloride-propylene copolymers of the instant invention is by suspension polymerization where the monomers are copolymerized in an aqueous system, under constant agitation, in the presence of appropriate suspending and surface active agents with the pH maintained at about 5 to 8.5. However, the copolymers may also be prepared by emulsion, solution, and bulk polymerization techniques. Processes for their manufacture are outlined in detail in U.S. Patent 3,468,858 which is incorporated by reference.

In carrying out the polymerization operation an aqueous mixture containing from about 0.005 to about 0.025 moles, preferably from 0.01 to 0.015 moles, of the dual initiator system comprising a t-butyl peroxyneoalkanoate and alpha-cumyl peroxyneodecanoate per mole of vinyl chloride monomer are charged into a reaction vessel capable of withstanding pressures up to 250 psi. The initiator system is charged in the preferred process after the vinyl chloride and propylene have been added.

When the molar ratio of t-butyl peroxyneoalkanoate:alpha-cumyl peroxyneodecanoate is at least about 1:1 in the dual initiator system, much less initiator is required to achieve a reaction time and yield comparable to that achieved using incremental additions of t-butyl peroxyneoalkanoate by itself. The reaction cycle time using solely alpha-cumyl peroxyneodecanoate

added in several portions is less than that of the dual initiator system; however, the alpha-cumyl peroxyneodecanoate causes overheating of the reactor after each addition leading to lower conversion and poorer product quality.

When the molar ratio of t-butyl peroxyneoalkanoate:alpha-cumyl peroxyneodecanoate is about 1.5:1 or greater, significantly shorter reaction cycle times are attained while maintaining the yield of product and control of the reaction. It is preferred that the t-butyl peroxyneodecanoate:alpha-cumyl peroxyneodecanoate molar ratio be at least 1.75:1 and the t-butyl peroxypivalate:alpha-cumyl peroxyneodecanoate molar ratio be about 2.5:1 or greater for significantly shortening reaction cycle times.

The dual initiator system may be incorporated into the reaction mixture in a single step, or alternatively, incrementally added as polymerization progresses. With incremental multiple addition a major amount should be used at the beginning of the cycle with aliquot portions of the balance being added during the cycle. However, it is much preferred to add the entire amount of the dual initiator system at the beginning of the cycle in the single step.

The aqueous polymerization mixture may also have dissolved in it suspending and wetting agents such as hydroxymethylcellulose, hydroxypropylmethylcellulose, polyvinyl alcohol, partially hydrolyzed polyvinyl alcohol, gelatin, sodium lauryl sulfate and the like. They are ordinarily used in amounts from about 0.01 to 0.5 wt.% based on the weight of the monomers. Temperatures of about 70-80°C should effectuate dissolution of the wetting and suspending agents.

After dissolving the catalyst and suspending and wetting agents in the aqueous mixture, the pressure reaction vessel is capped and flushed with nitrogen

followed by vinyl chloride monomer in the vapor form. Once agitation begins, the vinyl chloride (liquid) and propylene (gas or liquid) monomers are introduced. The system is then brought to a reaction temperature from about 35 to 80°C and, more optimally, from about 50 to 70°C with constant agitation. Preferably, the catalyst is added at this point. Under these conditions, using a homogeneous t-butyl peroxyneoalkanoate or isomeric mixtures of the same in combination with alpha-cumyl peroxyneodecanoate, reaction times can be about 5.0 hours or less.

EXAMPLE

For Runs 1-7 a 3¼ gallon stainless steel reactor was charged with the following materials:

Reactor Charge

| | |
|---|---|
| Distilled Water ($N_2$ cooled) | 4500 g |
| Sodium bicarbonate | 0.4 g |
| Hydroxypropylmethyl cellulose | 3.0 g |
| Vinyl chloride monomer | 2775 g |
| Propylene | 225 g |

The first three ingredients were added to the reactor which was then capped and flushed with nitrogen followed by vinyl chloride vapor. The liquefied vinyl chloride was then added followed by the propylene. The amount of propylene charged to the reactor provided the final copolymer product with a propylene content of about 4.5 wt. %. After raising the reactor temperature to 55°C and agitating the aqueous medium at 500 rpm, the dual initiator system was forced into the reactor with about 150 to 250g distilled water using nitrogen pressure. See Table 2 for the identity and quantity of the initiator system used in each run.

The t-butyl peroxypivalate used in the runs was Lupersol 11 initiator marketed by Lucidol Division of Pennwalt Corp. The t-butyl peroxyneodecanoate was Esperox 33 initiator marketed by Witco Chemical Corp.

TABLE 2

| | RUN | | | | | | |
|---|---|---|---|---|---|---|---|
| | 1 | 2 | 3 | 4 | 5 | 6 | 7 |
| t-butyl peroxyneodecanoate (moles) | 0.59 | -- | 0.131 | 0.195 | 0.235 | -- | -- |
| t-butyl peroxypivalate (moles) | -- | -- | -- | -- | -- | 0.332 | 0.439 |
| alpha-cumyl peroxyneodecanoate (moles) | -- | 0.59 | 0.105 | 0.111 | 0.125 | 0.125 | 0.125 |
| moles initiator / moles vinyl chloride | 0.0133 | 0.0133 | 0.0053 | 0.0069 | 0.0081 | 0.0103 | 0.0127 |
| moles t-butyl peroxyneoalkanoate / moles alpha-cumyl peroxyneodecanoate | -- | -- | 1.25 | 1.75 | 1.88 | 2.64 | 3.51 |
| Reaction time (hr) | 6.50 | 4.75 | 6.75 | 5.75 | 5.00 | 5.75 | 4.50 |
| Yield (%) | 73 | 66 | 70 | 72 | 73 | 73 | 71 |
| Thermal Stability (min. to degradation) at 190°C) | 18 | -- | -- | -- | 21 | -- | 21 |

In Run 1 44.4% of the t-butyl peroxyneodecanoate was initially charged to the reactor. After about 2.75 hours another 22.2% of the initiator was forced into the reactor. Finally after another 1.5 hours the remaining amount was charged. This technique of incremental multiple addition of initiator was used to stabilize the rate of the polymerization reaction over the reaction cycle.

In Run 2 the suspending system, which comprised hydroxypropylmethylcellulose (3g) and 30 to 50 mole % hydrolyzed polyvinyl alcohol (12g), and 40% of the alpha-cumyl peroxyneodecanoate were charged to the reactor. After 1.5 hours at reaction temperature 20% of the initiator was charged followed by the remaining 40% 1.5 hours later. This method of addition resulted in overheating of the reactor after each addition and a lower conversion, albeit the cycle time was short. Poor product quality flows from such non-isothermal operation.

In Runs 3-7 the entire amount of the t-butyl peroxyalkanoate and alpha-cumyl peroxyneodecanoate composing the dual initiator system was charged at the beginning of the reaction.

The thermal stability tests of the copolymer beads of Runs 1, 5 and 7 were conducted on a Brabender Plasticorder at 190°C at 100 rpm. Torque readings were taken just prior to obtaining the first sample at the 3 minute mark. Samples were taken every 3 minutes until total degradation as evidenced by a black color. The total Brabender Plasticorder bowl charge was 65.95 g. The composition below was used for all thermal stability tests.

Thermal Stability

| | |
|---|---|
| Copolymer resin | 65.0 g |
| Thermolite 35 organotin stabilizer[1] | 0.5 g |
| Mark 275 organotin stabilizer[2] | 0.4 g |
| Calcium stearate | 0.05 g |

[1] M&T Chemicals
[2] Argus Chemical

The data in Table 2 show that a dual initiator system comprising t-butyl peroxyneodecanoate and alpha-cumyl peroxyneodecanoate in a molar ratio of at least about 1:1 permits the use of an initiator charge which is only about 40% that of t-butyl peroxyneodecanoate by itself to achieve a comparable reaction time. From Runs 4 and 5 it can be seen that, when the molar ratio is at least about 1.5:1 and preferably at least 1.75:1, there is a substantial shortening of the reaction cycle time. In addition, the thermal stability of the copolymer product from Run 5 was 21 minutes to degradation at 190°C versus 18 minutes for the product of Run 1.

From Runs 6 and 7 it can be seen that a dual initiator system comprising t-butyl peroxypivalate and alpha-cumyl peroxyneodecanoate in a molar ratio of at least 2.5:1 affords significant speed-up in the reaction time. The copolymer product in Run 7 also demonstrated improved stability of 21 minutes to degradation at 190°C.

STATEMENT OF INDUSTRIAL APPLICATION

The use of a dual initiator system comprising a t-butyl peroxyneoalkanoate and alpha-cumyl peroxyneodecanoate in the suspension polymerization of a monomer mixture containing vinyl chloride and propylene shortens the reaction cycle time to the production of vinyl

chloride-propylene copolymer beads which have improved thermal stability and are useful in manufacture of phonograph records and battery casings.

## CLAIMS

1. In the suspension copolymerization of vinyl chloride and propylene to produce a vinyl chloride-propylene copolymer resin containing 1 to 10 wt. % propylene, the method for shortening the reaction cycle time which comprises using a free radical initiator system comprising a t-butyl peroxyneoalkanoate and alpha-cumyl peroxyneodecanoate.

2. The invention of Claim 1 wherein the t-butyl peroxyneoalkanoate is t-butyl peroxyneodecanoate.

3. The invention of Claim 1 wherein the t-butyl peroxyneoalkanoate is t-butyl peroxypivalate.

4. The invention of Claim 1 wherein the molar ratio of t-butyl peroxyneoalkanoate:alpha-cumyl peroxyneodecanoate is at least 1:1.

5. The invention of Claim 4 wherein the molar ratio is at least 1.5:1.

6. The invention of Claim 2 wherein the molar ratio of t-butyl peroxyneodecanoate:alpha-cumyl peroxyneodecanoate is at least 1.75:1.

7. The invention of Claim 3 wherein the molar ratio of t-butyl peroxypivalate:alpha-cumyl peroxyneodecanoate is at least 2.5:1.

8. The invention of Claim 1 wherein the entire amount of the dual initiator system is added to the polymerization reaction at the beginning of the cycle.

9. In the suspension copolymerization of vinyl chloride and propylene to produce a vinyl chloride-propylene copolymer resin containing 1 to 10 wt.% propylene, the method for shortening the copolymerization reaction cycle time which comprises adding to the reaction medium at the beginning of the reaction cycle the entire amount of a dual initiator system comprising in at least a 1:1 molar ratio either t-butyl peroxypivilate or t-butyl peroxyneodecanoate with alpha-cumyl peroxyneodecanoate.

10. The inventions of Claim 1 or 9 wherein about 0.005 to 0.025 moles of dual initiator system per mole of vinyl chloride monomer is used.

11. An organic peroxide polymerization dual initiator system for shortening the reaction cycle time in the copolymerization of vinyl chloride and propylene consisting essentially of a t-butyl peroxyneoalkanoate and alpha-cumyl peroxyneodecanoate.

12. The invention of Claim 11 wherein the t-butyl peroxyneoalkanoate is t-butyl peroxyneodecanoate.

13. The invention of Claim 11 wherein the t-butyl peroxyneoalkanoate is t-butyl peroxypivalate.

14. The invention of Claim 11 wherein the molar ratio of t-butyl peroxyneoalkanoate:alpha-cumyl peroxyneodecanoate is at least 1:1.

15. The invention of Claim 14 wherein the molar ratio is at least 1.5:1.

16. The invention of Claim 12 wherein the molar ratio of t-butyl peroxyneodecanoate:alpha-cumyl peroxyneodecanoate is at least 1.75:1.

17. The invention of Claim 13 wherein the molar ratio of t-butyl peroxypivalate:alpha-cumyl peroxyneodecanoate is at least 2.5:1.

P46-O

European Patent Office

# EUROPEAN SEARCH REPORT

0096365
Application number

EP 83 10 5456

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 074 589 (KUREHA) * Claims 1-3; page 1, lines 45-56 * | 1 | C 08 F 214/06<br>C 08 F 2/18<br>C 08 F 4/38 |
| X | DE-A-3 029 211 (HOECHST) * Claims 1,2; page 6, lines 20-21; page 9, lines 4-6 * | 1-4 | |
| D,A | LU-A- 68 203 (AIR PRODUCTS) * Claim 1 * | 1 | |

TECHNICAL FIELDS SEARCHED (Int. Cl. 3)

C 08 F

The present search report has been drawn up for all claims

| Place of search | Date of completion of the search | Examiner |
|---|---|---|
| THE HAGUE | 15-08-1983 | BOLETTI C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document